# EUROPÄISCHE PATENTSCHRIFT

(11) **EP 1 004 790 B1**
(45) Veröffentlichungstag und Bekanntmachung des Hinweises auf die Patenterteilung: **07.11.2001**
(21) Anmeldenummer: 99250369.8
(22) Anmeldetag: 19.10.1999
(51) Int. Cl.: F16D 65/74, F16D 65/14

(54) **Betätigungseinrichtung für verschleissspielbehaftete Maschinenelemente**
Actuating device for machine elements subject to wear-induced play
Dispositif d'actionnement pour éléments de machine développant du jeu dû à l'usure

(30) Priorität: 25.11.1998 DE 19855280
(43) Veröffentlichungstag der Anmeldung: 31.05.2000
(73) Patentinhaber: Knorr-Bremse MRP Systeme für Schienenfahrzeuge GmbH & Co. KG, 30453 Hannover (DE)
(72) Erfinder: Dellmann, Torsten, Dr.-Ing., 50737 Köln (DE); Kemner, Axel, Dipl.-Ing., 30916 Isernhagen (DE); Neumann, Harald, Dipl.-Ing., 52076 Aachen (DE); Heymer, Arne, Dipl.-Ing., 50767 Köln (DE)

(56) Entgegenhaltungen:
- GB-A- 258 260
- US-A- 4 291 789
- US-A- 4 553 644
- US-A- 4 802 559

## Beschreibung

Die Erfindung betrifft eine Betätigungseinrichtung für verschleißspielbehaftete Maschinenelemente, insbesondere für Bremsen von Schienenfahrzeugen gemäß dem Oberbegriff des Patentanspruches 1.

Als verschleißspielbehaftete Maschinenelemente im Sinne der vorliegenden Erfindung werden Maschinenelemente wie Kupplungen oder Bremsen angesehen. Derartige Maschinenelemente werden insbesondere zur Übertragung von Antriebs- bzw. Bremskräften bei Schienenfahrzeugen eingesetzt. Zum Unterbrechen und Schließen des Kraftflusses kommen Beläge zum Einsatz, die zum einen hohen thermischen Beanspruchungen standhalten und zum anderen einen günstigen Kraftflußverlauf ermöglichen. Diese Beläge unterliegen einem Verschleiß, der ein sich allmählich vergrößemdes Verschleißspiel verursacht. Zum Ausgleich dieses Verschleißspiels sind Nachstelleinrichtungen bekannt.

So geht beispielsweise aus der EP 0 174 690 eine gattungsgemäße Betätigungseinrichtung mit einer Stellmutter-Spindel-Baugruppe als Nachstelleinrichtung für Bremsen hervor. Die Nachstelleinrichtung baut auf einer Steuerhülse auf, die unter Federkraft stehend über eine erste Kupplung verhindert, daß eine Stellmutter über eine Drehbewegung eine Längsstellung der Kolbenspindel und insoweit eine Nachstellung bewirkt. Nach Durchlaufen eines vorbestimmten Spielweges wird durch Verschieben der Kolbenstange über einen bestimmten Weg hinaus die erste Kupplung gelöst, so daß die Verstellung des Spielweges entsprechend dem eingetretenen Belagverschleiß erhöht werden kann. Eine weitere Kolbenvorschubbewegung hat das Einkuppeln einer zweiten Kupplung zur Folge, so daß daraufhin die Verstellung der Stellmutter auf der Spindel gestoppt wird. Dieser komplizierte Mechanismus für das Ein- und Auskuppeln der Stellmutter verursacht einen hohen Bauteil- und Montageaufwand für die Fertigung dieser Betätigungseinrichtung. Die mechanisch durch Reibung hochbeanspruchten Bauteile, insbesondere die Kupplung, unterliegen einer starken Verschleißneigung.

Wie aus der DE-OS 22 01 082 hervorgeht, wird eine gattungsgemäße Nachstelleinrichtung für Schienenfahrzeugbremsen in Verbindung mit einer Kolben-Zylinder-Einheit zur Bremsbetätigung eingesetzt.

Die Schrift US 4,802,559, die die Merkmale des Oberbegriffs des Anspruchs 1 zeigt, offenbart einen Druckmittelwandler, der gemäß Spalte 2, Zeilen 42 bis 49 einen pneumatischen Kolben (piston 14) und einen hydraulischen Kolben (piston 14a) enthält. Die hier verwendete Membran im Bereich des pneumatischen Kolbens dient zur Kraftübertragung zum hydraulischen Kolben hin und steht nicht unmittelbar in Verbindung mit der Hydraulikflüssigkeit. Der in dieser Schrift offenbarte Druckmittelwandler besitzt einen komplizierten Aufbau, der die Abmessungen der gesamten Betätigungseinheit erheblich vergrößert.

Der Erfindung lag daher die Aufgabe zugrunde, eine einfach aufgebaute Betätigungseinrichtung, insbesondere für Bremsen von Schienenfahrzeugen, zu schaffen, die sowohl eine Verschleißspielnachstellung als auch eine Bremskraftaufbringung ermöglicht.

Die Erfindung wird ausgehend von einer Betätigungseinrichtung gemäß dem Oberbegriff des Patentanspruches 1 in Verbindung mit dessen kennzeichnenden Merkmalen gelöst. Die Erfindung schließt die technische Lehre ein, daß zum Verschleißspielausgleich die Nachstelleinrichtung nach Art einer hydraulischen Kolben-Zylinder-Einheit aufgebaut ist, die durch Ausfahren eines Stellkolbens die Verschleißspielnachstellung vollzieht, wobei zu dessen Betätigung ein Sensorelement das Verschleißspiel detektiert und bei Erreichen eines Grenzverschleißspiels ein Ventil öffnet, das unter Nutzung des Betriebsdruckes der betätigungskrafterzeugenden Kolben-Zylinder-Einheit die nachstellende Kolben-Zylinder-Einheit mit Hydraulikflüssigkeit beaufschlagt.

Damit erfolgt der Verschleißspielausgleich erfindungsgemäß durch eine Reihenschaltung zweier Kolben-Zylinder-Einheiten, wovon die erste Kolben-Zylinder-Einheit die Betätigungskraft - beispielsweise für die Bremse - und die zweite Kolben-Zylinder-Einheit die verschleißspielausgleichende Nachstellbewegung erzeugt. Der Vorteil dieser Anordnung liegt neben einem minimalen Bauteileaufwand und einer kompakten Bauform in der Minimierung von reibungsbedingtem Verschleiß. Es ist unbedingt erforderlich, daß die Kolben-Zylinder-Einheit der Nachstelleinrichtung hydraulisch betrieben ist, um durch die insoweit eingeschlossene Flüssigkeitssäule ein starres, unkomprimierbares System zu bilden. Dagegen ist es denkbar, daß die betätigungskrafterzeugende Kolben-Zylinder-Einheit hydraulisch oder pneumatisch betreibbar ist. Insbesondere bei Einsatz der Betätigungseinrichtung für Bremsen von Schienenfahrzeugen ist die betätigungskrafterzeugende Kolben-Zylinder-Einheit pneumatisch betrieben. Beide Kolben-Zylinder-Einheiten sind vorteilhafterweise über einen Druckmittelwandler getrennt. Vorzugsweise besteht der Druckmittelwandler aus einem tellerartigen Gehäuse, dessen offene Seite unter Bildung einer hydraulischen Druckkammer mit einer Membran verschlossen ist. Die der hydraulischen Druckkammer abgewandte Seite der Membran grenzt an eine pneumatische Druckkammer der betätigungskrafterzeugenden Kolben-Zylinder-Einheit an.

Das Sensorelement, welches das Verschleißspiel detektiert, kann in zwei bevorzugten Ausführungsformen ausgebildet sein. Zum einen kann das Sensorelement ein mechanischer Anschlag sein, der über einen Betätigungsstößel mit dem Ventil zusammenwirkt. Zum anderen kann das Sensorelement auch als ein elektrischer Drucksensor ausgebildet sein, der über eine Elektronikeinheit mit einem elektromagnetischen Ventil zusammenwirkt.

Während die betätigungskrafterzeugende Kolben-Zylinder-Einheit vorzugsweise als federrückgestellter einfachwirkender Druckmittelzylinder ausgebildet ist, ist innerhalb der hydraulischen Kolben-Zylinder-Einheit eine die Nachstellung unterstützende Feder angeordnet.

Eine weitere, die Erfindung hinsichtlich einer platzsparenden Anordnung verbessernde Maßnahme besteht darin, daß die pneumatische Druckkammer und die hydraulische Druckkammer im Inneren eines Hohlkolbens der betätigungskrafterzeugenden Kolben-Zylinder-Einheit angeordnet ist. Dabei steht die pneumatische Druckkammer mit einem Zylinderraum der betätigungskrafterzeugenden Kolben-Zylinder-Einheit in Verbindung.

Zur Rückstellung der Nachstelleinrichtung - beispielsweise um Bremsbeläge zu erneuern - kann ein handbetätigbares Rückflußventil vorgesehen werden, so daß die im Zylinderraum befindliche Hydraulikflüssigkeit in die hydraulische Druckkammer rückführbar ist.

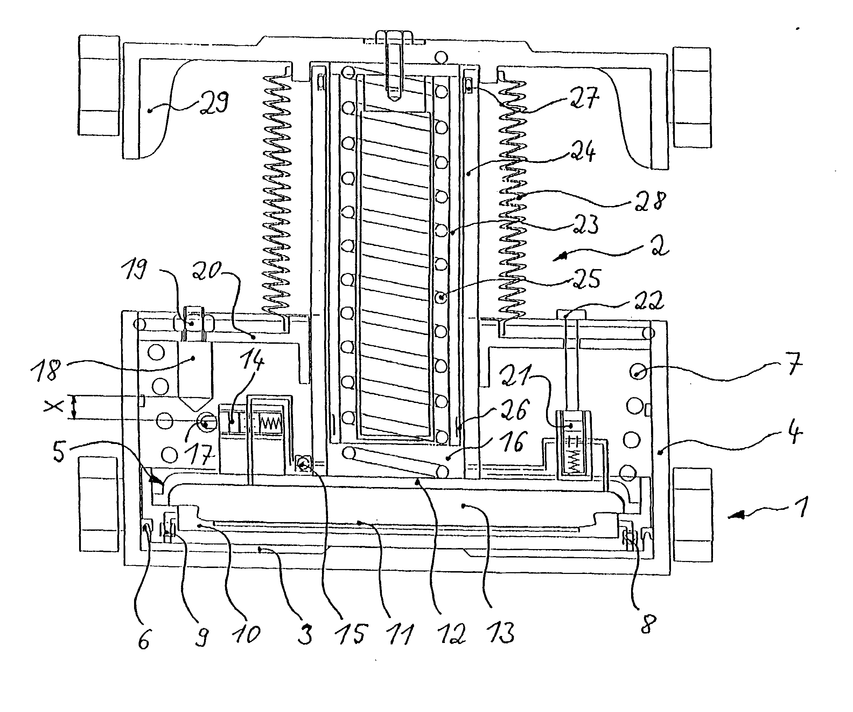

Weitere, die Erfindung verbessernde Maßnahmen sind in den Unteransprüchen angegeben bzw. werden nachstehend bei der Beschreibung einer bevorzugten Ausführungform der Erfindung anhand der Figur näher dargestellt.

Die einzige Figur zeigt einen Längsschnitt durch eine Betätigungseinrichtung für Bremsen von Schienenfahrzeugen, die im wesentlichen aus einer betätigungskrafterzeugenden und pneumatisch betriebenen Kolben-Zylinder-Einheit 1 und einer verschleißspielausgleichenden und hydraulisch betriebenen Kolben-Zylinder-Einheit 2 besteht.

Ein Zylinderraum 3 der Kolben-Zylinder-Einheit 1 wird aus einem topfförmigen Gehäuse 4 und einem Hohlkolben 5 gebildet. Bei Beaufschlagung des Zylinderraumes 3 mit Druckluft bewegt sich der Hohlkolben 5 gegen die Kraft einer Feder 7 aufwärts. Zwischen dem Hohlkolben 5 und dem Gehäuse 4 ist eine am Hohlkolben 5 befestigte außenradiale Dichtung 6 vorgesehen. Druckluft strömt weiterhin über ein Rückschlagventil 8 und eine Drossel 9 in eine innerhalb des Hohlkolbens 5 befindliche pneumatische Druckkammer 10. Die pneumatische Druckkammer 10 ist von einer Membran 11 als Druckmittelwandler begrenzt. Jenseits der Membran 11 befindet sich eine gemeinsam mit einem telleratigen Gehäuse 12 gebildete hydraulische Druckkammer 13. Die in der hydraulischen Druckkammer 13 befindliche Hydraulikflüssigkeit ist über ein Ventil 14 mit nachgeschaltetem Rückschlagventil 15 einem Zylinderraum 16 der hydraulischen Kolben-Zylinder-Einheit 2 zuführbar. Die Betätigung des Ventils 14, das als federrückgestelltes 2/2-Wegeventil ausgestattet ist, erfolgt über einen Betätigungsstößel 17. Der Betätigungsstößel 17 wird über einen verstellbaren mechanischen Anschlag 18 bedient. Zur Verstellung des Anschlages 18 ist eine Schraubverbindung 19 vorgesehen, mit der das Maß X des zulässigen Verschleißspiels eingestellt werden kann. Der Anschlag 18 ist in einem Deckel 20 des topfförmigen Gehäuses 4 befestigt. Ein Rücklauf der Hydraulikflüssigkeit von dem Zylinderraum 16 in die Druckkammer 13 - beispielsweise für den Fall eines Bremsbelagwechsels - kann über ein Ventil 21 von Hand über einen aus dem Deckel ragenden Stößel 22 ausgelöst werden. Zu diesem Zweck ist die Kolben-Zylinder-Einheit 2 von Hand einzufahren. Ein Stellkolben 23 bildet gemeinsam mit einem vom Hohlkolben 5 abgehenden Zylinder 24 die Kolben-Zylinder-Einheit 2. Eine Innenliegende Feder 25 dient der Unterstützung der Nachstellung. Der Stellkolben 23 wird über einen Gleitring 26 geführt und über eine Dichtung 27 gegenüber der Atmosphäre abgedichtet. Ein Faltenbalg 28 schützt die Kolben-Zylinder-Einheit 2 vor Verschmutzung von außen. Ein Anschlagelement 29 ist mit dem Stellkolben 23 verbunden und bildet den Abschluß der Betätigungseinrichtung.

Die Funktion der Betätigungseinrichtung für Bremsen wird vom Bremsdruck ausgelöst. Wird ein Bremsdruck in den Zylinderraum 3 gegeben, so strömt das Druckmittel sofort weiter über das Rückschlagventil 8 und die Drossel 9 in die Druckkammer 10 und übt hier eine Kraft auf die Membran 11 aus. Da die Ventile 14 und 21 gesperrt sind, wird die Kraft zunächst nicht an den Stellkolben 23 weitergeleitet. Zylinderraum 16 mit seiner eingeschlossenen Flüssigkeitssäule bildet ein starres System. Der aufgebrachte Druck im Zylinderraum 3 läßt somit den Hohlkolben 5 mit dem Zylinder 24 und der Druckplatte 29 ausfahren. Es erfolgt eine Betätigung der Bremse. Wird der Druck im Zylinderraum 3 wieder zurückgenommen, so führt die Feder 7 den Hohlkolben 5 in seine Ausgangsstellung zurück. Aufgrund von Verschleiß an der Bremsscheibe und dem Bremsbelag vergrößert sich der Anlagehub allmählich. Das Maß X zwischen dem Ventil 14 und dem Anschlag 18 wird überschritten. Infolge dessen wird das Ventil 14 über den Betätigungsstößel 17 betätigt; es besteht damit eine Verbindung zwischen der Druckkammer 13 und dem Zylinderraum 16. Da der Zylinderraum 3 mit Druckluft beaufschlagt ist, wird über die Membran 11 eine Kraft auf die Hydraulikflüssigkeit in der Druckkammer 13 ausgeübt. Diese pflanzt sich über das Ventil 14 in den Raum 16 fort und läßt den Kolben 23 mit der Druckplatte 29 ausfahren bis an die Bremsscheibe und bringt dann die komplette Bremskraft auf. Am Ende des Bremsvorganges wird der Zylinderraum 3 entlüftet. Die Druckkammer 10 dagegen wird nur langsam über die Drossel 9 entlüftet, so daß die Betätigungskraft kurzzeitig erhalten bleibt. Zwischenzeitlich drückt die Feder 7 den Kolben 24 zurück. Da aber das Ventil 14 noch auf Durchgang geschaltet ist, strömt die Hydraulikflüssigkeit von der Druckkammer 13 in die Druckkammer 16. Der Stellkolben 23 bleibt aufgrund der Druckkraft in seiner Position stehen, bis das Ventil 14 wieder schließt. Damit ist die Verschleißnachstellung abgeschlossen. Das Gesamtsystem fährt nachfolgend wieder zurück.

Ist die Verschleißspielnachstellung, d.h. der Stellkolben 23, komplett ausgefahren, so kann diese manuell zurückgeschoben werden. Hierzu wird das Ventil 21 über den Stößel 22 von Hand betätigt. Eine Verbindung zwischen dem Zylinderraum 16 und der Druckkammer 13 ist damit hergestellt. Der Stellkolben 23 kann jetzt zurückgeschoben werden. Die Hydraulikflüssigkeit fließt wieder in die Druckkammer 13 zurück. Die Druckkammer 13 ist gleichzeitig als Hydraulikflüssigkeitsspeicher zu betrachten. Eventuelle Leckagen können hierüber ausgeglichen werden.

Die erfindungsgemäße Betätigungseinheit zeichnet sich durch einen kompakten Aufbau aus und unterliegt wegen des Konzeptes zweier hintereinandergeschalteter Kolben-Zylinder-Einheiten einer geringen Verschleißneigung bei einem einfachen Aufbau, im Vergleich zu herkömmlichen Betätigungseinheiten mit einer mechanischen Spindelnachstellung.

### Bezugszeichenliste

- 1: Kolben-Zylinder-Einheit, betätigungskrafterzeugend
- 2: Kolben-Zylinder-Einheit, verschleißspielausgleichend
- 3: Zylinderraum
- 4: Gehäuse
- 5: Hohlkolben
- 6: Dichtung
- 7: Feder
- 8: Rückschlagventil
- 9: Drossel
- 10: Druckkammer
- 11: Membran
- 12: Gehäuse
- 13: Druckkammer
- 14: Ventil, 2/2-Wege
- 15: Rückschlagventil
- 16: Zylinderraum
- 17: Betätigungsstößel
- 18: Anschlag
- 19: Schraubverbindung
- 20: Deckel
- 21: Ventil
- 22: Stößel
- 23: Stellkolben
- 24: Zylinder
- 25: Feder
- 26: Gleitring
- 27: Dichtung
- 28: Faltenbalg
- 29: Druckplatte

## Patentansprüche

1. Betätigungseinrichtung für verschleißspielbehaftete Maschinenelemente, insbesondere für Bremsen von Schienenfahrzeugen, mit einer betätigungskrafterzeugenden Kolben-Zylinder-Einheit (1), deren Kolbenstange mit einer verschleißspielausgleichenden Nachstelleinrichtung zusammenwirkt, die die Betätigungskraft verschleißspielausgeglichen dem zu betätigenden Maschinenelement zur Verfügung stellt, wobei zum Verschleißspielausgleich die Nachstelleinrichtung nach Art einer hydraulischen Kolben-Zylinder-Einheit (2) aufgebaut ist, die durch Ausfahren eines Stellkolbens (23) die Verschleißspielnachstellung vollzieht
**dadurch gekennzeichnet, daß**
zur Betätigung des Stellkolbens (23) ein Sensorelement das Verschleißspiel detektiert und bei Erreichen eines Grenzverschleißspiels ein Ventil (14) öffnet, das unter Nutzung des Betriebsdruckes der betätigungskrafterzeugenden Kolben-Zylinder-Einheit (1) die nachstellende Kolben-Zylinder-Einheit (2) mit Hydraulikflüssigkeit beaufschlagt.

2. Betätigungseinrichtung nach Anspruch 1,
**dadurch gekennzeichnet,**
**daß** das Sensorelement ein mechanischer Anschlag (18) ist, der über einen Betätigungsstößel (17) mit dem Ventil (14) zusammenwirkt.

3. Betätigungseinrichtung nach Anspruch 1,
**dadurch gekennzeichnet,**
**daß** das Sensorelement ein elektrischer Drucksensor ist, der über eine Elektronikeinheit mit einem elektromagnetischen Ventil zusammenwirkt.

4. Betätigungseinrichtung nach Anspruch 1,
**dadurch gekennzeichnet,**
**daß** die betätigungskrafterzeugende Kolben-Zylinder-Einheit (1) pneumatisch betrieben ist und über einen Druckmittelwandler mit der nachstellenden hydraulischen Kolben-Zylinder-Einheit (2) in Verbindung steht.

5. Betätigungseinrichtung nach Anspruch 4,
**dadurch gekennzeichnet,**
**daß** der Druckmittelwandler aus einem tellerartigen Gehäuse (12) besteht, dessen offene Seite unter Bildung einer hydraulischen Druckkammer (13) mit einer Membran (11) verschlossen ist, wobei die der hydraulischen Druckkammer (13) abgewandte Seite der Membran (11) an eine pneumatische Druckkammer (10) der betätigungskrafterzeugenden Kolben-Zylinder-Einheit (1) angrenzt.

6. Betätigungseinrichtung nach einem der vorstehenden Ansprüche,
**dadurch gekennzeichnet,**
**daß** die betätigungskrafterzeugende Kolben-Zylinder-Einheit (1) über eine Feder (7) rückstellbar ist.

7. Betätigungseinrichtung nach einem der ansprüche 5 oder 6 :
**dadurch gekennzeichnet,**
**daß** die pneumatische Druckkammer (10) und die hydraulische Druckkammer (13) im Inneren eines Hohlkolbens (5) der betätigungskrafterzeugenden Kolben-Zylinder-Einheit (1) angeordnet sind, wobei die pneumatische Druckkammer (10) mit einem Zylinderraum (16) der betätigungskrafterzeugenden Kolben-Zylinder-Einheit (1) in Wirkverbindung steht.

8. Betätigungseinrichtung nach Anspruch 7,
**dadurch gekennzeichnet,**
**daß** in der Verbindung zwischen dem Zylinderraum (16) und der pneumatischen Druckkammer (10) eine Drossel (9) und ein in Sperrrichtung zum Zylinderraum (16) wirkendes Rückschlagventil (8) oder ein integriertes Drosselrückschlagventil vorgesehen ist.

9. Betätigungseinrichtung nach einem der vorstehenden Ansprüche,
**dadurch gekennzeichnet,**
**daß** in der Verbindung zwischen dem Ventil (17) und einem Zylinderraum (16) der hydraulischen Kolben-Zylinder-Einheit (2) ein in Sperrrichtung zum Ventil (17) wirkendes Rückschlagventil (15) vorgesehen ist.

10. Betätigungseinrichtung nach einem der vorstehenden Ansprüche,
**dadurch gekennzeichnet,**
**daß** innerhalb der hydraulischen Kolben-Zylinder-Einheit (2) eine die Nachstellung unterstützende Feder (25) angeordnet ist.

11. Betätigungseinrichtung nach einem der vorstehenden Ansprüche,
**dadurch gekennzeichnet,**
**daß** zur Rückstellung der Nachstelleinrichtung über ein mittels Stößel (22) betätigbares Rückflußventi! (21) die im Zylinderraum (16) befindliche Hydraulikflüssigkeit in die hydraulische Druckkammer (13) rückführbar ist.

## Claims

1. Actuating device for machine elements subject to wear-induced play, in particular for the brakes of rail vehicles, the said device having a piston/cylinder unit (1) which generates actuating force and the piston rod of which interacts with a re-adjusting device which compensates for wear-induced play and makes the actuating force available, in a manner compensated for wear-induced play, to the machine element to be actuated, wherein the re-adjusting device is constructed, for the purpose of compensating for wear-induced play, after the fashion of a hydraulic piston/cylinder unit (2) which effects the re-adjustment of wear-induced play by extending an adjusting piston (23), **characterised in that**, for the purpose of actuating the adjusting piston (23), a sensor element detects the wear-induced play and, when a limiting wear-induced play is reached, opens a valve (14) which acts on the re-adjusting piston/cylinder unit (2) with hydraulic fluid, using the operating pressure of the piston/cylinder unit (1) which generates actuating force.

2. Actuating device according to claim 1,
**characterised in that**
the sensor element is a mechanical stop (18) which interacts with the valve (14) via an actuating ram (17).

3. Actuating device according to claim 1,
**characterised in that** the sensor element is an electrical pressure sensor which interacts with an electromagnetic valve via an electronic unit.

4. Actuating device according to claim 1,
**characterised in that**
the piston/cylinder unit (1) which generates actuating force is pneumatically operated and is in communication with the re-adjusting hydraulic piston/cylinder unit (2) via an air-oil actuator.

5. Actuating device according to claim 4,
**characterised in that**
the air-oil actuator consists of a plate-like housing (12) whose open side is closed with a diaphragm (11), forming a hydraulic pressure chamber (13), that side of the diaphragm (11) which faces away from the hydraulic pressure chamber (13) being adjacent to a pneumatic pressure chamber (10) of the piston/cylinder unit (1) which generates actuating force.

6. Actuating device according to one of the preceding claims,
**characterised in that**
the piston/cylinder unit (1) which generates actuating force can be reset via a spring (7).

7. Actuating device according to one of claims 5 or 6,
**characterised in that**
the pneumatic pressure chamber (10) and the hydraulic pressure chamber (13) are disposed in the interior of a hollow piston (5) of the piston/cylinder unit (1) which generates actuating force, the pneumatic pressure chamber (10) being in operative connection with a cylinder space (16) of the piston/cylinder unit (1) which generates actuating force.

8. Actuating device according to claim 7,
**characterised in that**
a throttle (9) and a non-return valve (8) which operates in the blocking direction towards the cylinder space (16), or an integrated throttle/non-return valve is/are provided in the connection between the cylinder space (16) and the pneumatic pressure chamber (10).

9. Actuating device according to one of the preceding claims,
**characterised in that**
a non-return valve (15) which operates in the blocking direction towards the valve (17) is provided in the connection between the valve (17) and a cylinder space (16) of the hydraulic piston/cylinder unit (2).

10. Actuating device according to one of the preceding claims,
**characterised in that**
a spring (25) which assists re-adjustment is disposed inside the hydraulic piston/cylinder unit (2).

11. Actuating device according to one of the preceding claims,
**characterised in that**,
for the purpose of resetting the re-adjusting device, the hydraulic fluid located in the cylinder space (16) can be fed back into the hydraulic pressure chamber (13) via a return-flow valve (21) which can be actuated by means of a ram (22).

## Revendications

1. Dispositif d'actionnement pour éléments de machine développant du jeu dû à l'usure, notamment pour freins de véhicules ferroviaires, comportant un ensemble (1) cylindre-piston qui produit la force d'actionnement et dont la tige de piston coopère avec un dispositif de rattrapage de jeu qui met la force d'actionnement à disposition de l'élément de machine à actionner tout en compensant le jeu dû à l'usure, le dispositif de rattrapage de jeu étant, afin de compenser le jeu dû à l'usure, conçu à la manière d'un ensemble (2) cylindre-piston hydraulique qui accomplit le rattrapage du jeu dû à l'usure en déployant un piston (23) de réglage, **caractérisé en ce que**, afin d'actionner le piston (23) de réglage, un élément détecteur détecte le jeu dû à l'usure et, à l'atteinte d'un jeu limite, ouvre une soupape (14) qui alimente en liquide hydraulique l'ensemble (2) cylindre-piston rattrapant le jeu en utilisant la pression de service de l'ensemble (1) cylindre-piston produisant la force d'actionnement.

2. Dispositif d'actionnement suivant la revendication 1, **caractérisé en ce que** l'élément détecteur est une butée (18) mécanique qui coopère avec la soupape (14) par l'intermédiaire d'un poussoir (17) d'actionnement.

3. Dispositif d'actionnement suivant la revendication 1, **caractérisé en ce que** l'élément détecteur est un capteur de pression électrique qui coopère avec une soupape électromagnétique par l'intermédiaire d'une unité électronique.

4. Dispositif d'actionnement suivant la revendication 1, **caractérisé en ce que** l'ensemble (1) cylindre-piston produisant la force d'actionnement est à fonctionnement pneumatique et est relié à l'ensemble (2) cylindre-piston hydraulique rattrapant le jeu par l'intermédiaire d'un échangeur de pression pneumatique-hydraulique.

5. Dispositif d'actionnement suivant la revendication 4, **caractérisé en ce que** l'échangeur de pression pneumatique-hydraulique est constitué d'un boîtier (12) du genre disque dont le côté ouvert est fermé par une membrane (11) en formant une chambre (13) de pression hydraulique, le côté de la membrane (11) qui est opposé à la chambre (13) de pression hydraulique étant limitrophe d'une chambre (10) de pression pneumatique de l'ensemble (1) cylindre-piston produisant la force d'actionnement.

6. Dispositif d'actionnement suivant l'une des revendications précédentes, **caractérisé en ce que** l'ensemble (1) cylindre-piston produisant la force d'actionnement peut être rappelé au moyen d'un ressort (7).

7. Dispositif d'actionnement suivant la revendication 5 ou 6, **caractérisé en ce que** la chambre (10) de pression pneumatique et la chambre (13) de pression hydraulique sont disposées à l'intérieur d'un piston (5) creux de l'ensemble (1) cylindre-piston produisant la force d'actionnement, la chambre (10) de pression pneumatique étant fonctionnellement reliée à une chambre (16) de cylindre de l'ensemble (1) cylindre-piston produisant la force d'actionnement.

8. Dispositif d'actionnement suivant la revendication 7, **caractérisé en ce qu'**un étranglement (9) et un clapet (8) antiretour agissant en direction d'isolement vers la chambre (16) de cylindre, ou un clapet antiretour à étranglement intégré, sont prévus dans la liaison entre la chambre (16) de cylindre et la chambre (10) de pression pneumatique.

9. Dispositif d'actionnement suivant l'une des revendications précédentes, **caractérisé en ce qu'**un clapet (15) antiretour agissant en direction d'isolement vers la soupape (14) est prévu dans la liaison entre la soupape (14) et une chambre (16) de cylindre de l'ensemble (2) cylindre-piston hydraulique.

10. Dispositif d'actionnement suivant l'une des revendications précédentes, **caractérisé en ce qu'**un ressort (25) assistant le rattrapage de jeu est disposé à l'intérieur de l'ensemble (2) cylindre-piston hydraulique.

11. Dispositif d'actionnement suivant l'une des revendications précédentes, **caractérisé en ce que**, afin de réinitialiser le dispositif de rattrapage de jeu, le liquide hydraulique se trouvant dans la chambre (16) de cylindre peut être ramené dans la chambre (13) de pression hydraulique par l'intermédiaire d'une soupape (21) de reflux qui peut être actionnée au moyen d'un poussoir (22).
